Europäisches Patentamt

European Patent Office

Office européen des brevets

(11) Numéro de publication: **0 113 627**
**B1**

# FASCICULE DE BREVET EUROPÉEN

(45) Date de publication du fascicule du brevet:
24.09.86

(21) Numéro de dépôt: **83402487.9**

(22) Date de dépôt: **20.12.83**

(51) Int. Cl.⁴: **H 04 N 3/15, H 01 L 27/14**

(54) Procédé d'analyse d'un dispositif photosensible à transfert de ligne.

(30) Priorité: **28.12.82 FR 8221866**

(43) Date de publication de la demande:
**18.07.84 Bulletin 84/29**

(45) Mention de la délivrance du brevet:
**24.09.86 Bulletin 86/39**

(84) Etats contractants désignés:
**DE GB NL**

(56) Documents cité:
**FR-A-2 504 334**

(73) Titulaire: **THOMSON- CSF, 173, Boulevard Haussmann, F-75379 Paris Cedex 08 (FR)**

(72) Inventeur: **Berger, Jean- Luc, THOMSON- CSF SCPI 173, bld Haussmann, F-75379 Paris Cedex 08 (FR)**
Inventeur: **Brissot, Louis, THOMSON- CSF SCPI 173, bld Haussmann, F-75379 Paris Cedex 08 (FR)**
Inventeur: **Cazaux, Yvon, THOMSON- CSF SCPI 173, bld Haussmann, F-75379 Paris Cedex 08 (FR)**

(74) Mandataire: **Mayeux, Michèle, THOMSON- CSF SCPI 19, avenue de Messine, F-75008 Paris (FR)**

LIBER, STOCKHOLM 1986

## Description

La présente invention concerne un procédé d'analyse d'un dispositif photosensible à transfert de ligne.

On connaît dans l'art antérieur, notamment par les demandes de brevet français n° 2.481.553 et 2.504.334, des dispositifs photosensibles dont l'analyse s'effectue par transfert de ligne.

On rappelle que d'une façon générale, ces dispositifs comportent une zone photosensible constituée de M lignes de N points photosensibles chacune. Les points photosensibles des différentes lignes sont reliés en paralléle par des colonnes conductrices à une mémoire. Cette mémoire assure périodiquement le transfert vers un registre de lecture des charges-signal recueillies sur une ligne de points photosensibles et transférées sur les colonnes. De plus, cette mémoire assure le transfert vers un drain d'évacuation des charges-parasites se trouvant sur les colonnes avant l'arrivée sur les colonnes des charges-signal de l'une des lignes.

Dans les dispositifs photosensibles à transfert de ligne, il y a donc répétition, de façon périodique, des deux séquences suivantes:

- une première séquence correspondant au transfert vers la mémoire des charges-parasites se trouvant sur les colonnes, avant l'arrivée des charges-signal sur les colonnes;

- une seconde séquence correspondant au transfert vers la mémoire des charges-signal d'une ligne se trouvant sur les colonnes.

Le problème qui se pose est que dans l'intervalle de temps compris entre une première et une seconde séquence, il y a accumulation sur les colonnes de charges parasites qui sont lues lors de la seconde séquence, en même temps que les charges-signal.

Ces charges parasites sont dues à la diaphotie (ou "smearing") et surtout au débordement des points photosensibles par suite d'un éclairement trop intense, on parle déblouissement (ou "blooming").

Il faut signaler que comme les points photosensibles des différentes lignes sont reliés en parallèle par des colonnes conductrices, il suffit d'un point trop intensément éclairé et qui déborde pour que la colonne à laquelle ce point est relié reçoive des charges parasites.

La présente invention permet de résoudre le problème précédemment exposé de façon simple et efficace.

Le procédé selon la revendication 1 consiste à modifier temporairement la capacité de stockage des points photosensibles pour qu'ils puissent stocker des charges dans l'intervalle de temps débutant après l'évacuation des charges-parasites des colonnes conductrices vers la mémoire et se terminant par le transfert des charges-signal d'une ligne des colonnes vers la mémoire.

On peut augmenter la capacité de stockage des points photosensibles pendant cet intervalle de temps.

On peut aussi diminuer la capacité de stockage des points photosensibles, pendant l'évacuation des charges-parasites des colonnes conductrices vers la mémoire et revenir à la capacité normale des points photosensibles pour le début dudit intervalle.

Ainsi pendant cet intervalle, les points photosensibles ont une capacité suffisante pour pouvoir stocker des charges. Les points photosensibles ne sont pas saturés et ne débordent pas sur les colonnes même s'ils sont éblouis. Les quantités de charges-signal lues ne sont donc pas altérées par les charges-parasites.

D'autres objets, caractéristiques et résultats de l'invention ressortiront de la description suivante donnée à titre d'exemple non limitatif et illustrée par les figures annexées qui représentent:

- la figure 1, le schéma d'un dispositif photosensible à transfert de ligne selon l'art antérieur;

- les figures 2a à g, des schémas illustrant le fonctionnement d'un dispositif selon l'art antérieur;

- les figures 3a à c et 4a à d et 5a à d, des schémas illustrant deux variantes du procédé selon l'invention.

Sur les différentes figures, les mêmes repères désignent les mêmes éléments, mais pour des raisons de clarté les cotes et proportions des divers éléments ne sont pas respectées.

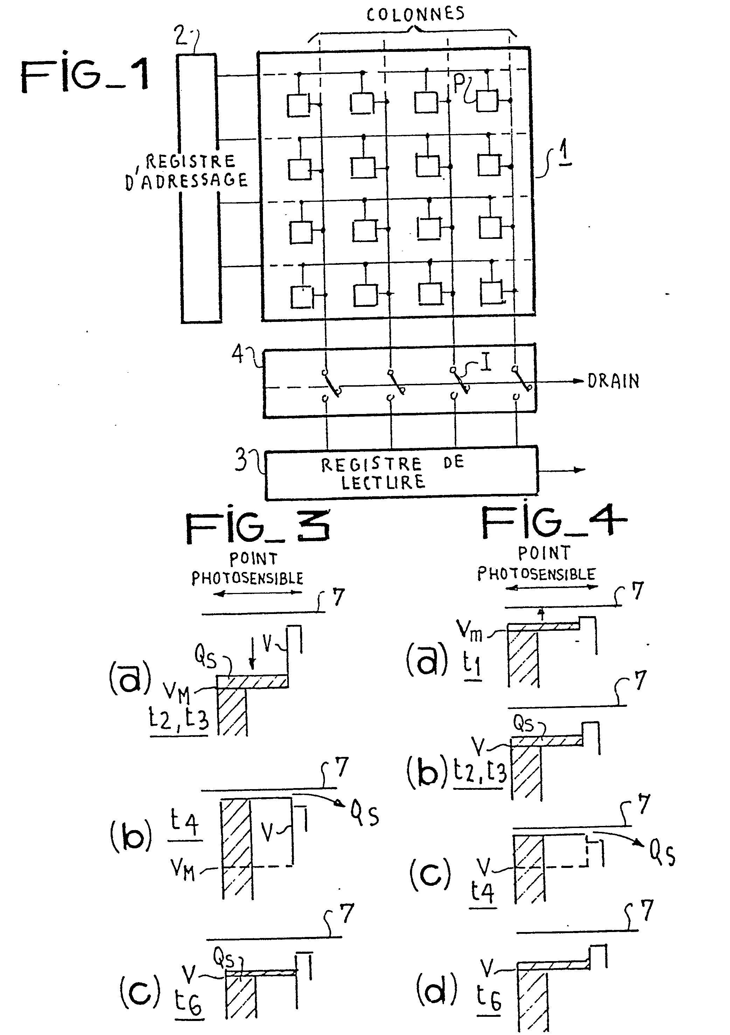

La figure 1 est le schéma d'un dispositif photosensible à tramsfert de ligne selon l'art antérieur.

Sur la figure 1, on a représenté schématiquement une zone photosensible 1, constituée d'une matrice de M lignes comportant chacune N points photosensibles P. Cette zone reçoit l'image lumineuse à analyser et la transforme en charges électriques, dites charges-signal $Q_S$. Les points photosensibles d'une même ligne sont reliés entre eux ainsi qu'à un registre d'adressage 2 qui permet de sélectionner une ligne de la matrice qui va être lue. Les points photosensibles d'une colonne sont reliés par une même colonne conductrice. Les colonnes conductrices aboutissent à une mémoire 4. Cette mémoire comporte des moyens de commutation symbolisés par des interrupteurs 1 et conduisant les charges se trouvant sur les colonnes conductrices soit vers un drain d'évacuation, soit vers un registre de lecture 3. La mémoire assure périodiquement le transfert vers le registre de lecture des charges-signal recueillies sur une ligne de points photosensibles et transférées sur les colonnes. De plus, la mémoire assure périodiquement le transfert vers un drain d'évacuation des charges-parasites se trouvant sur les colonnes avant l'arrivée sur les colonnes des charges-signal de l'une des lignes.

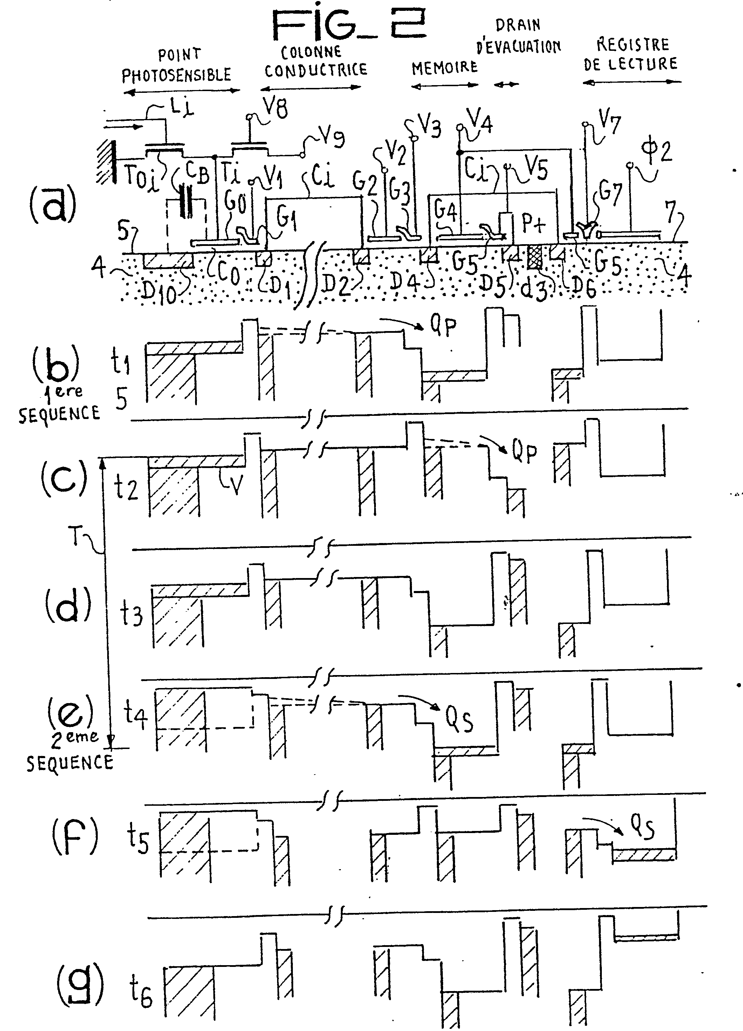

Les figures 2a à g sont des schémas illustrant le fonctionnement d'un dispositif selon l'art antérieur. Ces figures ont été décrites de façon très détaillée dans la demande de brevet français n° 2.481.553 à laquelle on se reportera si nécessaire. On rappellera seulement que la figure 2a est une vue en coupe longitudinale du dispositif photosensible représenté sur la figure 1 de la demande de brevet citée et que les figures 2b à g représentent l'évolution du potentiel de surface $\emptyset_S$ dans le substrat semi-conducteur 4 à divers instant $t_1$ à $t_6$. Dans le mode de réalisation de la figure 2a, chaque point photosensible est constitué par l'association d'un photo-MOS, constitué par une grille photosensible $G_O$, et d'une photodiode $D_{10}$.

Au temps $t_1$ - figure 2b - les charges-Parasites $Q_p$ se trouvant sur les colonnes conductrices sont transférées vers la mémoire. Au temps $t_2$ - figure 2c - les charges-parasites $Q_p$ sont évacuées de la mémoire vers le drain.

Au temps $t_3$ - figure 2d - il n'y a pas de transfert mais la mémoire a complètement évacué les charges-parasites et peut à nouveau stocker des charges.

Au temps $t_4$ - figure 2e - il y a transfert vers la mémoire des charges-signal $Q_S$ d'une ligne qui avaient préalablement été transférées sur les colonnes. Pour cela, la ligne en question reçoit par le registre d'adressage un potentiel égal au potentiel de référence du dispositif. Les autres lignes photosensibles, comme cela est représente en pointillés sur la figure 2e, continuent à recevoir une tension de polarisation $V_g$ et continuent donc à integrer des charges.

Au temps $t_5$ - figure 2f - les charges-signal $Q_S$ de la ligne lue sont transférées de la mémoire vers le registre de lecture.

Au temps $t_6$ - figure 2g - il n'y a pas de transfert de charge mais la mémoire a complètement évacué les charges-signal et peut à nouveau stocker des charges.

Dans les dispositifs photosensibles à transfert de ligne, et quelles que soient les variantes apportées à ces dispositifs, il y a répétition de façon périodique des deux séquences suivantes:

- une première séquence correspondant au transfert vers la mémoire des charges-parasites se trouvant sur les colonnes avant l'arrivée des charges-signal sur les colonnes - temps $t_1$ - figure 2b;

- une seconde séquence correspondant au transfert vers la mémoire des charges-signal d'une ligne se trouvant sur les colonnestemps $t_4$ - figure 2e.

Dans l'intervalle de temps T compris entre la fin d'une première étape et la fin d'une seconde étape - c'est-à-dire entre les instants $t_2$ et $t_4$ sur la figure 2- il y a accumulation sur les colonnes de charges-parasites qui sont lues au temps $t_4$ en même temps que les charges-signal.- Comme cela a été dit, ces charges sont surtout dues au débordement de points photosensibles suréclairés sur les colonnes conductrices.

Les figures 3a à c et 4a à d sont des schémas illustrant deux variantes du procédé selon l'invention dans le cas de points photosensibles constitués comme sur la figure 2a par l'association d'un photo-MOS et dune photodiode. Comme les figures 2b à g, ces figures montrent l'évolution du potentiel de surface dans le substrat à divers instants, mais on ne s'est intéressé qu'à ce qui se passe au niveau des points photosensibles car le fonctionnement du reste du dispositif n'est pas modifié.

Selon la revendication 1, on modifie temporairement la capacité de stockage des points photosensibles pour qu'ils puissent stocker des charges dans l'intervalle de temps T, même s'ils sont éblouis. Ainsi pendant cet intervalle les points photosensibles, même s'ils sont suréclairés ne débordent pas sur les colonnes.

Dans la variante du procédé représentée sur les figures 3a à c, on augmente pendant l'intervalle de temps T la capacité de stockage des points photosensibles.

Cette augmentation de la capacité de stockage peut être obtenue en agissant sur la tension de polarisation des points photosensibles. Dans l'exemple de la figure 2a ou le substrat semiconducteur 4 est de type P, il suffit d'augmenter la tension de polarisation $V_g$ appliqué aux grilles $G_o$ pour accroître la capacité de stockage des points photosensibles.

Sur la figure 3a, au temps $t_2$ - début de l'intervalle T - on augmente la capacité de stockage des points photosensibles en agissant sur leur tension de polarisation.

La profondeur des puits de potentiel pour les points photosensibles est alors au niveau $V_M$ alors qu'elle est au niveau V, inférieur à $V_M$, au temps $t_1$.

Cette situation se poursuit pendant l'intervalle T - c'est-à-dire aux temps $t_3$ et $t_4$ - excepté pour les points photosensibles de la ligne dont le contenu est transféré des colonnes en mémoire au temps $t_4$.

Les points photosensibles de cette ligne reçoivent par le registre d'adressage le potentiel de référence du dispositif comme cela est représenté sur la figure 3b où l'on a représenté en pointillés la situation des autres points photosensibles.

Sur la figure 3c, au temps $t_6$, les points photosensibles reprennent leur capacité de stockage normale et la profondeur des puits revient au niveau V. Il peut alors y avoir débordement de charges sur les colonnes. Ces charges en excès seront évacuées vers le drain au temps $t_1$ suivant.

Pendant l'intervalle de temps T, les points photosensibles, même s'ils sont suréclairés, ne débordent pas sur les colonnes.

Dans la variante du procédé représentée sur les figures 4a à d, on diminue la capacité de stockage des points photosensibles pendant l'évacuation des charges-parasites des colonnes conductrices vers la mémoire, puis on revient à la capacité de stockage normale des points photosensibles pour le début de l'intervalle T.

Sur la figure 4a, au temps $t_1$, on diminue la capacité de stockage des points photosensibles. Le niveau des puits de potentiel passe du niveau V au niveau $V_m$ qui lui est inférieur. Cela peut être obtenu en diminuant la tension de polarisation

des grilles $G_o$. Il suffit de diminuer la capacité de stockage des points photosensibles un court instant. Ainsi les points qui étaient déjà saturés, ou sur le point de l'être, sont débarassés d'une partie de leurs charges qui est évacuée vers le drain. Tous les points photosensibles sont donc prêts à stocker des nouvelles charges.

Dès le début de l'intervalle T, c'est-à-dire au temps $t_2$ - figure 4b - on donne aux points photosensibles leur capacité de stockage normale. Le niveau des puits de potentiel passe de $V_m$ à V. Pendant l'intervalle de temps T, les points photosensibles, même s'ils sont éblouis, sont donc aptes à stocker une quantité de charges égale à celle qui a été évacuée par contraction de capacité au temps $t_1$ et il n'y a pas débordement de charges-parasites sur les colonnes.

Au temps $t_4$ - figure 4c - les points d'une ligne reçoivent la tension de référence de façon à transférer leurs charges sur les colonnes, alors que les autres points conservent leur capacité de stockage normale et la profondeur de leurs puits reste au niveau V ce qui est représenté en pointillés sur la figure 4c.

Au temps $t_6$ - figure 4 d - tous les points photosensibles du dispositif retrouvent leur capacité de stockage normale.

Ce procédé permet donc de façon simple et efficace d'empêcher les points photosensibles éblouis de déborder pendant l'intervalle de temps T.

Ce procédé s'applique de la façon qui vient d'être décrite lorsque les points photosensibles ne sont constitués que par des photo-MOS, et ne comportent pas de photodiodes. Comme précédement, on modifie la capacité de stockage des points photosensibles en agissant sur la tension de polarisation des grilles des photo-MOS.

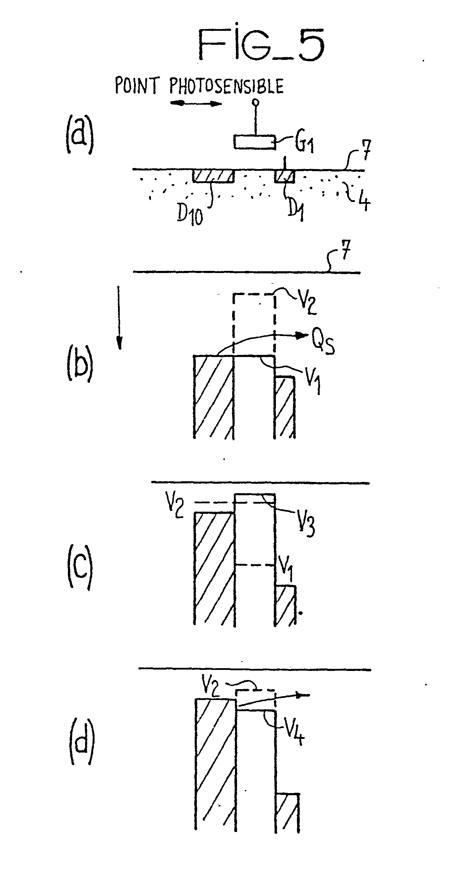

Lorsque les points photosensibles sont constitués par des photodiodes, comme cela est représenté sur la figure 5a, chaque point photosensible comporte donc une photodiode $D_{10}$, intégrée sur le substrat semi-conducteur 4 de type P et séparée d'une diode $D_1$ reliée à une colonne $C_i$ par une grille $G_1$ qui n'est pas soumise au rayonnement et qui reçoit une tension de polarisation.

Pendant l'intégration des charges dans les photodiodes, la tension de polarisation de la grille $G_1$ a une valeur $V_2$ égale par exemple à + 1V. La grille $G_1$ isole alors chaque photodiode des diodes $D_1$ reliées aux colonnes, comme cela a été représenté en pointillés sur la figure 2b où les potentiels de surface croissant sont dirigés vers le bas.

Pour lire les charges intégrées dans les photodiodes, la tension de polarisation de la grille $G_1$ prend une valeur $V_1$, égale par exemple à 10 V et il y a transfert des charges-signal sur les diodes D1.

La figure 5c illustre la variante du procédé selon l'invention correspondant à celle qui est représentée sur la figure 3.

Au début de l'intervalle T, la tension de polarisation de la grille $G_1$ prend une valeur $V_3$ égale par exemple à 0,5 V et donc inférieure à $V_2$, ce qui augmente la capacité de stockage des points photosensibles. Comme dans le cas de la figure 3, cette situation se poursuit pendant l'intervalle T, excepté pour les points photosensibles dont le contenu est transféré en mémoire et pour lesquels la tension de polarisation de la grille prend la valeur $V_1$.

Lorsque l'intervalle T est terminé la tension de polarisation reprend la valeur $V_2$.

La figure 5d illustre la variante du procédé selon l'invention correspondant à celle qui est représentée sur la figure 4, cette variante est plus facile à mettre en oeuvre que celle de la figure 5c.

Avant le début de l'intervalle T, au temps $t_1$, la grille $G_1$ reçoit une tension de polarisation $V_4$, égale par exemple à 2 V et donc supérieure à $V_2$. On diminue ainsi la capacité de stockage des points photosensibles. Dès le début de l'intervalle T, on donne aux points photosensibles leur capacité de stockage normale en donnant à la tension de polarisation la valeur $V_2$.

**Revendications**

1. Procédé d'analyse d'un dispositif photosensible à transfert de ligne, ce dispositif comportant une zone photosensible (1) de M lignes de N points photosensibles, les points photosensibles (P) des différentes lignes étant reliés en parallèle par des colonnes conductrices à une mémoire (4) qui assure périodiquement le transfert vers un registre de lecture (3) des charge-signal ($Q_S$) se trouvant sur les colonnes et en provenance d'une ligne et qui assure le transfert vers un drain d'évacuation des charges-parasites ($Q_p$) se trouvant sur les colonnes avant l'arrivée des charges-signal d'une ligne, caractérisé en ce qu'il consiste à modifier temporairement la capacité de stockage des points photosensibles pour qu'il puissent stocker des charges dans l'intervalle de temps (T) débutant après ($t_1$) l'évacuation des charges-parasites des colonne conductrices vers la mémoire (4) et se terminant ($t_4$) par le transfert des charges-signal ($Q_S$) d'une ligne des colonnes vers la mémoire (4).

2. Procédé selon la revendication 1, caractérisé en ce que pendant cet intervalle (T), on augmente la capacité de stockage des points photosensibles.

3. Procédé selon la revendication 1, caractérisé en ce que, pendant ($t_1$) l'évacuation des charges-parasites des colonnes conductrices vers la mémoire (4), on diminue la capacité de stockage des points photosensibles, puis on revient à la capacité de stockage normale des points photosensibles pour le début dudit intervalle (T).

4. Procédé selon l'une des revendications 1 à 3, caractérisé en ce que lorsque les points photosensibles sont constitués de photo-MOS ou de photo-MOS associées à des photodioade, on modifie la capacité de stockage des points photosensibles en agissant sur la tension de polarisation des grilles des photo-MOS.

Procédé selon l'une des revendications 1 à 3, caractérisé en ce que lorsque les points photosensibles sont constitués par des photodiodes, on modifie la capacité de stockage des points photosensible en agissant sur la tension de polarisation de grilles $(G_1)$ qui contrôlent le passage entre les photodiodes et les colonnes.**Ty

**Patentansprüche**

Analyseverfahren für eine mit zeilenweiser Überführung arbeitende photosensible Vorrichtung mit einem photosensiblen Bereich (1) von M Zeilen aus N photosensiblen Punkten, wobei die photosensiblen Punkte (P) der verschiedenen Zeilen durch leitfähige Spalten parallel an einen Speicher (4) angeschlossen sind, der periodisch die Überführung der Signalladungen $(Q_S)$, die sich in den Spalten befinden und aus einer Zeile kommen, in ein Leseregister (3) garantiert und der die Übertragung der Streuladungen $(Q_p)$, die sich in den Spalten vor dem Eintreffen der Signalladungen aus einer Zeile befinden, in einen Abfuhrkanal garantiert, dadurch gekennzeichnet, daß es besteht aus einem vorübergehenden Ändern der Kapazität zum Speichern der photosensiblen Punkte, damit sie Ladungen in der Zeitspanne (T) einspeichern können, die nach $(t_1)$ dem Abführen der Streuladungen von den leitenden Spalten in den Speicher (4) beginnt und die mit der Überführung der Signalladungen $(Q_S)$ aus einer Zeile der Spalten in den Speicher (4) endet $(t_4)$.

2. Verfahren nach Anspruch 1, dadurch gekennzeichnet, daß während der Zeitspanne (T) die Speicherungskapazität für photosensible Punkte erhöht wird.

3. Verfahren nach Anspruch 1, dadurch gekennzeichnet, daß während $(t_1)$ des Abführens der Streuladungen von den leitfähigen Spalten in den Speicher (4) die Speicherungskapazität für photosensible Punkte verringert wird und darauf zur normalen Speicherungskapazität für photosensible Punkte für den Beginn der Zeitspanne (T) zurückgekehrt wird.

4. Verfahren nach einem der Ansprüche 1 bis 3, dadurch gekennzeichnet, daß, wenn die photosensiblen Punkte durch Photo-MOS oder durch mit Photodioden verbundenen Photo-MOS gebildet sind, die Speicherungskapazität für photosensible Punkte durch ein Einwirken auf die Vorspannung der Gate-Anschlüsse der Photo-MOS verändert wird.

5. Verfahren nach einem der Ansprüche 1 bis 3, dadurch gekennzeichnet, daß, wenn die photosensiblen Punkte durch Photodioden gebildet sind, die Speicherungskapazität für photosensible Punkte durch eine Einwirkung auf die Vorspannung der Gate-Anschlüsse $(G_1)$, die den Durchlaß zwischen den Photodioden und den Spalten steuern, verändert wird.

**Claims**

1. Method of analyzing a line-type transfer photosensitive device comprising a photosensitive zone (1) of M lines of N photosensitive points, the photosensitive points (P) of the different lines being connected in parallel by conductive columns to a memory (4) which ensures periodically the transfer to a read register (3) of the signal charges $(Q_S)$ disposed on the columns and coming from a line and which ensures the transfer to an evacuation drain of the parasitic charges $(Q_p)$ disposed on the columns before the arrival of the signal charges of a line, characterized in that it resides in modifying temporarily the storage capacity of the photosensitive points so that they can store the charges in the interval of time (T) starting after $(t_1)$ the evacuation of the parasitic charges of the conductive columns to the memory (4) and terminating $(t_4)$ in the transfer of the signal charges $(Q_S)$ of a line of the columns to the memory (4).

2. Method according to claim 1, characterized in that during the interval of time (T) the storage capacity of the photosensitive points is increased.

3. Method according to claim 1, characterized in that during $(t_1)$ the evacuation of the parasitic charges of the conductive columns to the memory (4) the storage capacity of the photosensitive points is reduced and then returned to the normal storage capacity of the photosensitive points for the start of said interval (T).

4. Method according to one of claims 1 to 3, characterized in that when the photosensitive points are constituted by photo MOSs or photo MOSs associated with photodiodes the storage capacity of the photosensitive points is modified by acting on the polarization voltage of the gates of the photo MOSs.

5. Method according to any one of claims 1 to 3, characterized in that when the photosensitive points are constituted by photodiodes the storage capacity of the photosensitive points is modified by acting on the polarization voltage of the gates $(G_1)$ which control the passage between the photodiodes and the columns.

**0 113 627**

COLONNES

FIG_1

REGISTRE D'ADRESSAGE

DRAIN

REGISTRE DE LECTURE

FIG_3
POINT PHOTOSENSIBLE

(a) $t_2, t_3$

(b) $t_4$

(c) $t_6$

FIG_4
POINT PHOTOSENSIBLE

(a) $t_1$

(b) $t_2, t_3$

(c) $t_4$

(d) $t_6$

0 113 627

FIG_2

# FIG_5

POINT PHOTOSENSIBLE

(a)

$G_1$

7

$D_{10}$  $D_1$  4

7

(b)

$V_2$

$Q_S$

$V_1$

(c)

$V_2$  $V_3$

$V_1$

(d)

$V_2$

$V_4$